Europäisches Patentamt

European Patent Office

Office européen des brevets

(11) Veröffentlichungsnummer : **0 084 618**
**B1**

(12) # EUROPÄISCHE PATENTSCHRIFT

(45) Veröffentlichungstag der Patentschrift :
**22.01.86**

(21) Anmeldenummer : **82110509.5**

(22) Anmeldetag : **12.09.80**

(60) Veröffentlichungsnummer der früheren Anmeldung
nach Art. 76 EPÜ : **0026855**

(51) Int. Cl.4 : **A 01 D 33/08**

(54) Verfahren und Vorrichtung zur Feldreinigung von Rodungsfrüchten.

(43) Veröffentlichungstag der Anmeldung :
**03.08.83 Patentblatt 83/31**

(45) Bekanntmachung des Hinweises auf die Patenterteilung : **22.01.86 Patentblatt 86/04**

(84) Benannte Vertragsstaaten :
**AT BE DE FR IT NL SE**

(56) Entgegenhaltungen :
**DE-A- 2 042 467**
**DE-A- 2 655 781**
**DE-C-  758 181**
**US-A- 2 635 614**

(73) Patentinhaber : **Dietrich, Martin**
**Paternoster 5**
**D-8851 Mertingen (DE)**

(72) Erfinder : **Dietrich, Martin**
**Paternoster 5**
**D-8851 Mertingen (DE)**

(74) Vertreter : **Munk, Ludwig, Dipl.-Ing.**
**Patentanwalt Prinzregentenstrasse 1**
**D-8900 Augsburg (DE)**

Jouve, 18, rue St-Denis, 75001 Paris, France

**Beschreibung**

Die Erfindung betrifft nach einem ersten übergeordneten Erfindungsgedanken ein Verfahren zur Feldreinigung von Rodungsfrüchten, insbesondere Zuckerrüben, die nach der Rodung durch Strahlen eines Reinigungsmittels allseitig beaufschlagt werden. Ein weiterer übergeordneter Erfindungsgedanke bezieht sich auf eine Vorrichtung zur Durchführung dieses Verfahrens.

Ein Verfahren mit den gattungsgemäßen Merkmalen ist aus der DE-A-2 655 781 bekannt. Bei diesem bekannten Verfahren findet Luft als Reinigungsmittel Verwendung. Dieses bekannte Verfahren läßt zwar für viele Einsatzfälle zufriedenstellende Ergebnisse erwarten. Nachteilig kann sich jedoch der hohe Luftverbrauch auswirken, insbesondere wenn hohe Durchsatzmengen von zu reinigenden Rodungsfrüchten verkraftet werden müssen, was beispielsweise bei mehrscharigen Erntegeräten der Fall sein kann. Ein weiteres Problem kann hierbei die Beherrschung der Staubentwicklung, insbesondere bei trockenen Böden, darstellen.

Aus der US-A-2 635 614 ist ein Reinigungsverfahren für Rodungsfrüchte bekannt, bei dem Wasser in Form von kontinuierlichen Druckstrahlen auf die zu reinigenden Früchte einwirkt. Hierbei ist zwar ein hoher Reinigungseffekt zu erreichen und eine Staubentwicklung praktisch nicht zu befürchten. Bei dem bekannten Verfahren gemäß US-A-2 635 614 handelt es sich jedoch nicht um ein mobiles Verfahren zur Feldreinigung, das unmittelbar nach dem Roden zur Anwendung kommt, sondern vielmehr um ein stationäres Reinigungsverfahren, das erst unmittelbar vor der Weiterverarbeitung der Rodungsfrüchte in einem Verarbeitungsbetrieb stattfindet. Hierbei fällt daher der Ackerboden, der etwa 50 % des Erntegewichts ausmachen kann, als Ballast an, was nicht nur zu Beseitigungsproblemen im Bereich des Verarbeitungsbetriebs führt, sondern gleichzeitig auch eine Bodenverarmung der Felder zur Folge hat. Es wurde daher schon vorgeschlagen, den bei der Reinigung im Betrieb anfallenden Ackerboden wieder auf die Felder zurückzuführen. Der hierfür erforderliche Transportaufwand für den Transport von Ballast vom Feld zum Betrieb und wieder zurück ist jedoch sehr hoch.

Hiervon ausgehend ist es daher die Aufgabe der vorliegenden Erfindung ein Naßreinigungsverfahren zur Reinigung von Rodungsfrüchten zu schaffen, das sich auch für einen mobilen Einsatz direkt auf dem Felde eignet. Eine weitere Aufgabe der vorliegenden Erfindung besteht darin, eine einfache und kostengünstige Vorrichtung zur Durchführung eines derartigen Verfahrens zur Verfügung zu stellen.

Die verfahrensmäßige Lösung der erstgenannten Aufgabe besteht darin, daß das Reinigungsmittel zumindest zum überwiegenden Teil eine Flüssigkeit, vorzugsweise Wasser ist, die bei der Feldreinigung mitgeführt und nach Beaufschlagung der Rodungsfrüchte einer zweistufigen Wiederaufbereitung unterzogen wird, indem die Reinigungsrückstände in Form von mit Schmutz beladener Flüssigkeit aufgefangen, die Schmutzrückstände hieraus abgezogen und ausgepreßt und die Flüssigkeitsrückstände einer Feinreinigung unterworfen werden.

Die erfindungsgemäße Wiederaufbereitung des Wassers ergibt einen geschlossenen Wasserkreislauf. Die mitzuführende Wassermenge kann daher vergleichsweise gering sein. Dennoch ist hierbei über einen langen Zeitraum hinweg ein ununterbrochener Reinigungsbetrieb ohne Nachtanken und damit ein mobiler Einsatz gewährleistet. Die zweistufige Wiederaufbereitung ergibt einen hohen Reinigungsgrad, was eine starke Schonung der die Strahldüsen beaufschlagenden Pumpen ermöglicht. Hierfür können daher in vorteilhafter Weise Hochdruckpumpen zur Verwendung kommen, ohne daß ein Verschleiß innerhalb kurzer Dauer zu befürchten wäre. Hiermit sind in vorteilhafter Weise vergleichsweise harte Strahlen erzeugbar, so daß auch fest anhaftender Schmutz zuverlässig gelockert und abgesprengt wird. Die erfindungsgemäß verwendete Flüssigkeit ermöglicht in vorteilhafter Weise gleichzeitig eine Einweichung der zu reinigenden Rodungsfrüchte, was die nachfolgende Schmutzentfernung erleichtert. Das erfindungsgemäße Verfahren verkraftet somit verhältnismäßig hohe Durchsatzmengen bei einem vergleichsweise geringen Einsatz an Reinigungsflüssigkeit. Hierdurch ist es in vorteilhafter Weise möglich, mit kontinuierlichen Strahlen zu arbeiten, was eine Steuerung entbehrlich macht. Die verwendete Reinigungsflüssigkeit schwemmt in vorteilhafter Weise nach Beaufschlagung der zu reinigenden Rodungsfrüchte den hiervon entfernten Schmutz fort, wodurch einer Staubentwicklung von Anfang an wirksam entgegengewirkt wird und gleichzeitig eine automatische Sauberhaltung der Reinigungsstation gewährleistet ist.

Die vorrichtungsmäßige Lösung gelingt ausgehend von einer Vorrichtung mit mindestens einer, vorzugsweise auf einem mit einer Rodeeinrichtung versehenen Erntegerät angeordneten, mit Rodungsfrüchten im Durchlaufbetrieb beschickbaren Reinigungsstation, die mit peripher angeordneten, nach innen gerichteten Strahldüsen versehen ist, erfindungsgemäß dadurch, daß die Reinigungsstation oberhalb einer Auffangeinrichtung für die Reinigungsrückstände angeordnet ist, der mindestens ein die Schmutzrückstände erfassendes Räumorgan zugeordnet ist, mittels dessen eine Preßeinrichtung zum Auspressen und Ausbringen der Schmutzrückstände beaufschlagbar ist, und daß die Flüssigkeitsrückstände einer Nachreinigungseinrichtung zuführbar sind, die mit einem Flüssigkeitstank versehen ist, an den eine die Strahldüsen der Reinigungsstation beaufschlagende Flüssigkeitspumpe freisaugend angeschlossen ist. Diese Maßnahmen ermöglichen einen besonders sparsamen Umgang mit dem mitzuführenden, flüssigen Reinigungsmittel und gestatten daher eine äußerst kompakte Bauweise.

Bei der Vorrichtung gemäß US-A-2 635 614 wird eine in einem eine Auffangeinrichtung bildenden Becken unterhalb des Flüssigkeitsspiegels angeordnete Strahldüse mittels einer Flüssigkeitspumpe beaufschlagt, deren Saugstutzen mit einem die Höhe des Flüssigkeitsstands im Becken begrenzenden Überlauf verbunden ist. Oberhalb des Flüssigkeitsspiegels sind weitere, aus einem Leitungsnetz versorgte Strahldüsen vorgesehen, unter denen ein aus dem Becken ansteigendes Transportorgan vorbeigeführt ist. Die unter Wasser angeordnete Strahldüse wird hierbei zwar mit Wasser aus dem Becken gespeist, das somit in einem geschlossenen Kreislauf geführt wird. Eine Reinigung dieses Wassers findet jedoch nicht statt. Bei ruhigen Gewässern können sich Schwebstoffe zwar in an sich bekannter Weise am Boden absetzen. Bei der Füllung des hier vorliegenden Auffangbeckens handelt es sich jedoch nicht um ein ruhiges Gewässer. Die unter Wasser angeordnete Strahldüse hat nämlich zusammen mit einem zugeordneten Prallblech gerade die Aufgabe, Wasserpulsationen und -wogen zu erzeugen. Die Folge davon ist zwangsläufig, daß die Schmutzrückstände in Bewegung und mit den Wasserrückständen vermischt sind und somit zusammen mit dem Wasser in den Überlauf gelangen und von der Pumpe verkraftet werden müssen. Die Verwendung einer Hochdruckpumpe zur Erzeugung harter Druckstrahlen ist bei der bekannten Anordnung daher nicht möglich, da die Schmutzrückstände zu einem rasanten Verschleiß führten. Dementsprechend sind bei der Anordnung gemäß US-A-2 635 614 zum Abstrahlen der zu reinigenden Rodungsfrüchte weitere, von außerhalb beaufschlagte Strahldüsen erforderlich. Hieraus konnte demnach keine Anregung zur erfindungsgemäßen Verbesserung des gattungsgemäßen Standes der Technik entnommen werden.

Vorteilhafte Ausgestaltungen und zu bevorzugende Fortbildungen der übergeordneten Maßnahmen ergeben sich aus der nachstehenden Beschreibung einiger Ausführungsbeispiele anhand der Zeichnung in Verbindung mit den Ansprüchen.

In der Zeichnung zeigen :

Figur 1 eine schematische Darstellung eines Rübenerntegeräts mit einer eingebauten Flüssigkeitsreinigungsvorrichtung,

Figur 2 die Flüssigkeitsreinigungsvorrichtung im Detail anhand eines Blockschaltbilds,

Figur 3 eine bevorzugte Ausführungsform einer Flüssigkeitsreinigungsvorrichtung mit Wiederaufbereitung der Flüssigkeit und

Figur 4 eine andere Ausführungsform einer Flüssigkeitsreinigungsvorrichtung mit Wiederaufbereitung der Reinigungsflüssigkeit.

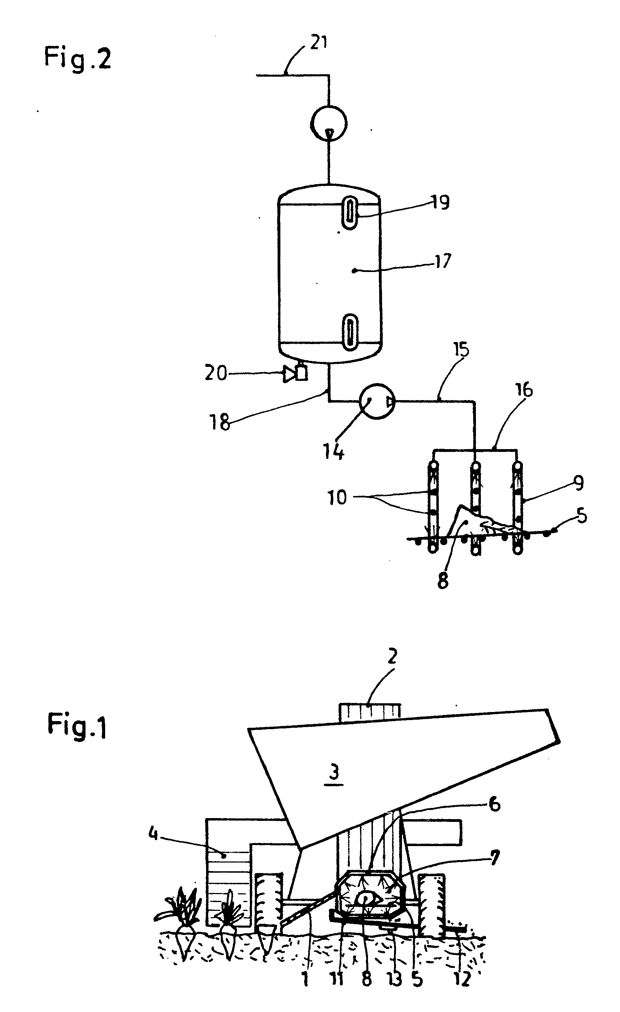

Das in Figur 1 dagestellte Rübenerntegerät ist in an sich bekannter Weise mit hier nicht näher ausgeführten Köpf- und Rodeeinrichtungen versehen. Die geköpften Rüben werden mittels eines bei 1 angedeuteten Transportbands einem Elevator 2 zugeführt und mit Hilfe des Elevators 2 in einen Bunker 3 eingebracht. Die mit Blättern besetzten Rübenköpfe werden von einem bei 4 angedeuteten Transportband aufgenommen und ebenfalls in einen Bunker eingebracht oder einfach seitlich neben dem Erntegerät abgelegt. Die gerodeten Rüben werden auf ihrem Weg zum Elevator 2 mit Wasserstrahlen beaufschlagt, welche das anhaftende Erdreich absprengen und wegschwemmen. Hierzu ist im dargestellten Ausführungsbeispiel eine von einem Transportband 5 durchsetzte, als Ganzes mit 6 bezeichnete Reinigungsstation vorgesehen, die kranzförmig angeordnete Strahldüsen aufweist, mit welchen die zu reinigenden Rüben während ihres Durchlaufs durch die Reinigungsstation 6 allseitig beaufschlagt werden können. Die bei 7 angedeuteten Wasserstrahlen werden dabei kontinuierlich aufrechterhalten, was einen hohen Durchsatz der bei 8 angedeuteten, auf dem Transportband 5 aufliegenden Rüben ermöglicht und eine Steuerung entbehrlich macht.

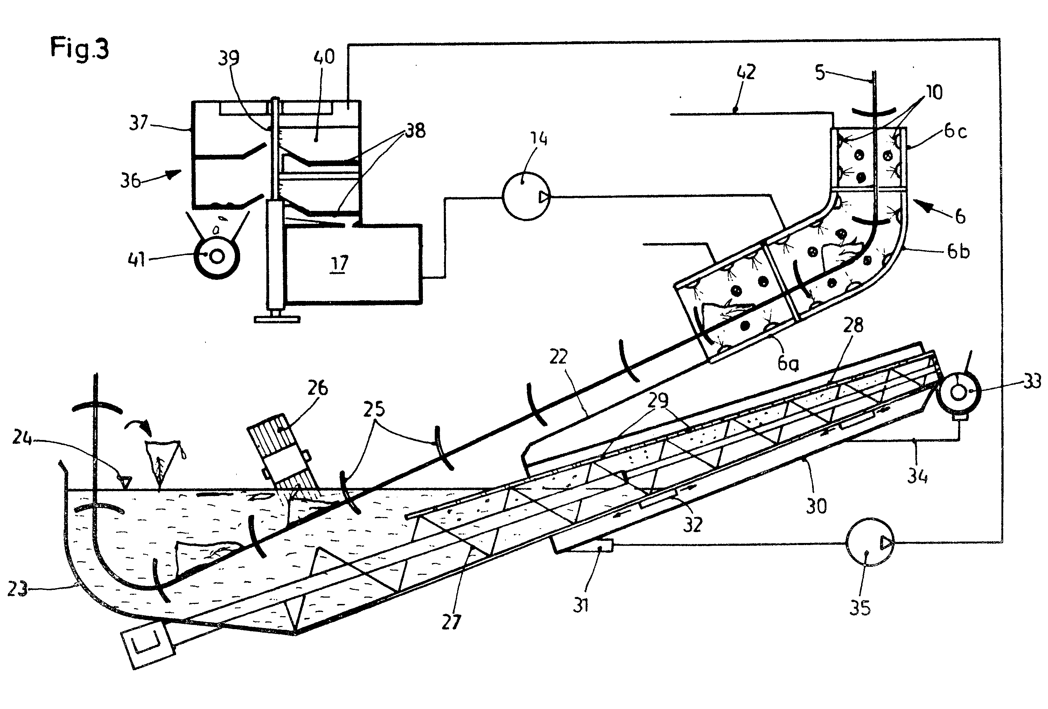

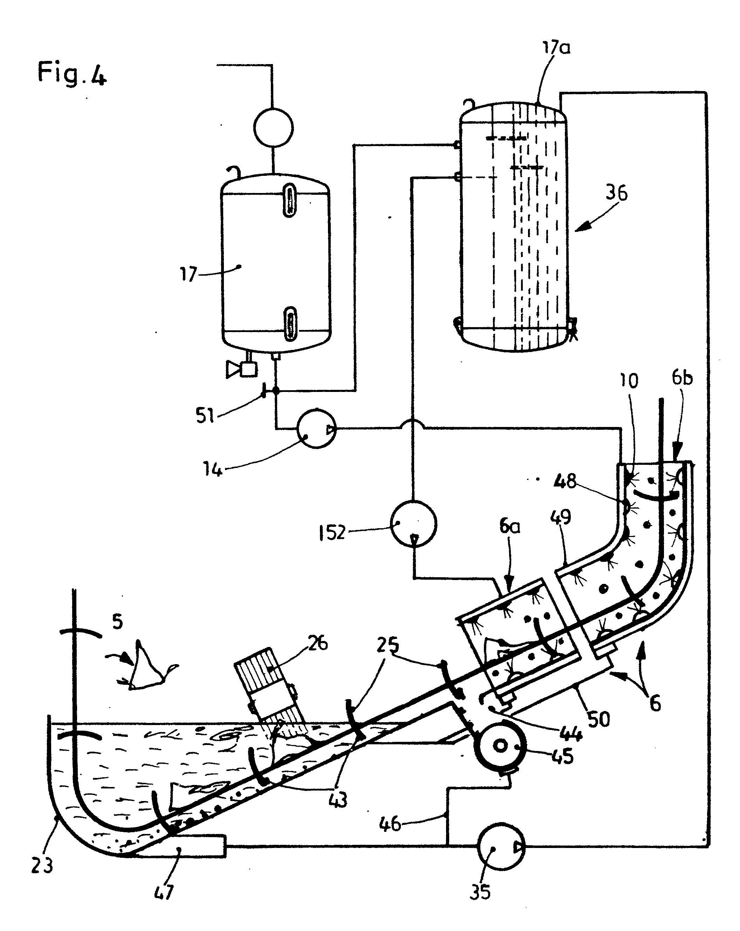

Die Reinigungsstation 6 kann, wie Figur 2 anschaulich erkennen läßt, einfach aus mehreren, käfigartig nebeneinander angeordneten Ringleitungen 9 bestehen, die im Bereich ihres inneren Umfangs mit etwa durch einfache Bohrungen gebildeten Strahldüsen 10 versehen sind. Das Transportband 5 kann einfach, wie Figur 2 weiter erkennen läßt, durch einen bewegbaren Gitterrost gebildet werden so daß die hierauf aufgenommenen Rüben 8 allseitig beaufschlagbar sind und das hiervon ablaufende, mit Schmutzrückständen beladene Wasser ungehindet abfließen kann. Unterhalb der Reinigungsstation 6 ist eine Auffangeinrichtung angebracht, aus der die Schmutzrückstände entfernt und der Wasserrückstand abgesaugt und einer Nachreinigung zugeführt werden. Dieser geschlossene Wasserkreislauf gestattet einen sparsamen Wasserverbrauch, wie im Detail anhand der Figur 3 und 4 beschreiben wird. Die Auffangeinrichtung 11 ist mit einem Auswurf 12 für Feststoffe versehen, der mittels eines Vibrators 13 in leichte Schwingungen versetzt werden kann.

Zur kontinuierlichen Wasserversorgung der Strahldüsen 10 ist eine in Figur 2 bei 14 angedeutete Hochdruckpumpe vorgesehen, deren Druckstutzen 15 über Stichleitungen 16 an die käfigartig nebeneinander angeordneten, mit Strahldüsen 10 besetzten Ringleitungen 9 angeschlossen ist. Zur Bildung eines Wasserreservoirs ist ein entweder direkt auf dem Rübenerntegerät oder der dieses ziehenden Zugmaschine montierbarer Tank 17 vorgesehen, an den die Hochdruckpumpe 14 mit ihren Saugstutzen 18 freisaugend angeschlossen sein kann, so daß sich keine Unterbrechungen des Pumpbetriebs ergeben. Der Wassertank 17 ist zur Kontrolle des Füllungsstands mit Schaugläsern 19 versehen. Es wäre aber auch denkbar, eine automatische Überwachungseinrichtung vorzusehen, die beim Absinken des Füllungsstands unter einen vorgegebenen Mindestwert mittels einer Hupe 20 oder dergleichen ein Warnsignal abgibt. Der Wassertank 17 wird von Zeit zu Zeit nachgefüllt. Hierzu ist ein Füllstutzen 21 vorgesehen.

Bei dem in Figur 3 dargestellten Ausführungsbeispiel weist die weiterhin als Ganzes mit 6 bezeichnete Reinigungsstation ein rohrförmiges Gehäuse auf, das im Bereich seines Innenumfangs mit kranzförmig angeordneten Strahldüsen 10 versehen ist. Die zu den Strahldüsen 10 führenden Versorgungsleitungen können in das Rohrgehäuse integriert sein, das hierzu etwa doppelwandig ausgeführt sein kann. Das die Reinigungsstation 6 bildende Rohrgehäuse ist entgegen der Laufrichtung des es durchsetzenden Transportbands 5 nach unten geneigt, so daß das verbrauchte, schmutzbeladene Wasser selbsttätig hieraus abfließt. Im dargestellten Ausführungsbeispiel wird das aus dem die Reinigungsstation 6 bildenden Rohrgehäuse abfließendes Wasser über ein Leitblech 22 in ein unterhalb der Reinigungsstation 6 angeordnetes, eine Auffangeinrichtung bildendes Becken 23 eingeleitet, in welches das Transportband 5 eintaucht. Die zu reinigenden Rüben werden zunächst in das Becken 23 eingeworfen, in welchem zur Bildung eines Wasserbads stets ein ausreichender Wasserstand aufrechterhalten wird, wie bei 24 angedeutet ist. Das in das Becken 23 eintauchende Transportband 5 ist hier mit geeigneten Mitnehmern 25 versehen, welche jeweils eine oder mehrere Rüben nach einer gewissen Verweilzeit aus dem Wasserbad entnehmen und der Reinigungsstation 6 zuführen. Der Aufenthalt im Becken 23 bewerkstelligt eine Aufweichung des an den Rüben anhaftenden Schmutzes, der dann durch die in der Reinigungsstation 6 auf die Rüben einwirkenden Wasserstrahlen leicht abgeschwemmt werden kann. Das Becken 23 wirkt gleichzeitig als der Reinigungsstation 6 vorgeordneter Puffer, so daß die Reinigungsstation 6 gleichmäßig mit zu reinigenden Rüben beaufschlagt wird, was sich vorteilhaft auf den Wirkungsgrad auswirkt.

Zur Schonung der die Strahldüsen 10 versorgenden Pumpe ist eine mehrstufige Wasserreinigung vorgesehen. Das den Strahldüsen 10 zugeführte Wasser wird zur Bewerkstelligung eines geschlossenen Wasserkreislaufs und damit eines sparsamen Wasserverbrauchs aus dem Becken 23 entnommen, in das es nach erfolgter Beaufschlagung der zu reinigenden Rodungsfrüchte selbsttätig wieder zurückläuft. Die auf Wasseroberfläche schwimmenden Verunreinigungen werden mittels eines bei 26 angedeuteten Zinkenbands oder Zinkenrads entfernt, welches etwa im Austauchbereich des Transportbands 5 die Wasseroberfläche abkämmt. Die auf den Boden des Beckens 23 absinkenden Verunreinigungen werden hier durch ein weiter vorgesehenes Räumorgan entfernt. Hierzu ist der Beckenboden im dargestellten Ausführungsbeispiel eine im Becken 23 steigend angeordnete, sich verjüngende Schnecke 27 vorgesehen, deren unter Wasser liegender Einzugsbereich durch eine in Figur 3 nicht näher bezeichnete Rinne des Beckenbodens gebildet werden kann und die in einem den Wasserspiegel nach oben überragenden Siebgehäuse 28 gelagert ist. Die von der Schnecke 27 vom Beckenboden abgezogene Wasser-Schmutzaufschwemmung wird infolge der Verjüngung der Schnecke 27 ausgepreßt. Das ausgepreßte Wasser kann durch die Poren 29 des Siebgehäuses 28 austreten und fließt in das Becken 23 zurück. Im dargestellten Ausführungsbeispiel ist das Siebgehäuse 28 von einem geschlossenen Mantelgehäuse 30 umgeben, welches als Wasserauffangbassin dient. Das Mantelgehäuse 30 ist mit einem vom Becken 23 nur noch über das Siebgehäuse 28 erreichbaren Auslaßstutzen 31 für das somit bereits vorgereinigte Wasser versehen. Sofern die Poren 29 des Siebgehäuses 28 dazu neigen sollten, sich selbsttätig zuzusetzen, kann dem einfach durch leichte Rüttelbewegungen entgegengewirkt werden. Entsprechende Vibratoren sind bei 32 angedeutet. Die von der Schnecke 27 bereits ausgepreßten Feststoffe werden über deren Ausbringdüse auf eine quer hierzu angeordnete Fördereinrichtung, im dargestellten Ausführungsbeispiel eine weitere Schnecke 33, abgeladen, welche diese Feststoffe seitlich neben dem Erntegerät auf den Ackerboden abwirft. Das von der Schnecke 33 weiter ausgepreßte Wasser kann einfach mittels einer Rücklaufleitung 34 in das Mantelgehäuse 30 der Schnecke 33 eingeleitet werden.

An den Auslaßstutzen 31 des Mantelgehäuses 30 ist eine Niederdruckpumpe 35 angeschlossen, welche das aus dem Mantelgehäuse 30 und damit indirekt aus dem Becken 23 abgezogene Wasser einer nachgeordneten Nachreinigungseinrichtung zuführt. Diese könnte etwa aus einem oder mehreren Zyklonen bestehen. Im dargestellten Ausführungsbeispiel ist hierzu eine als Ganzes mit 36 bezeichnete Filterstation vorgesehen. Diese besteht aus einer Trommel 37, in welche der Druckstutzen der Niederdruckpumpe 35 drucklos einmündet. In der Trommel 37 sind zwei übereinander angeordnete Filterböden 38 vorzugsweise unterschiedlicher Maschen- bzw. Porengröße vorgesehen. Die Filterböden 38 werden durch hierüber hinweggeführte Räumorgane abgeräumt. Hierzu sind im dargestellten Ausführungsbeispiel an einer stehend angeordneten Welle 39 befestigte Flügel 40 vorgesehen. Die abgestreiften Feststoffe werden über eine Luke entweder direkt auf den Ackerboden oder, wie im dargestellten Ausführungsbeispiel auf ein nach seitwärts wegführendes Transportmittel 41 abgeworfen. Das die Filterböden 38 durchsetzende Wasser gelangt in einen hier entsprechend der Numerierung gemäß Figur 2 ebenfalls mit 17 bezeichneten Wassertank. Hierzu kann eine an die Trommeln 37 angeschlossene Pumpe vorgesehen sein. Im dargestellten Ausführungsbeispiel ist die Trommel 37 direkt auf den Wassertank 17 aufgesetzt, an den die Reinigungsstation 6 mit Druckwasser versorgende Hochdruckpumpe 14 freisaugend angeschlossen sein kann.

Bei den in Figur 3 dargestellten Ausführungsbeispiel besteht die Reinigungsstation 6 aus mehreren, hier drei hintereinander angeordneten Stufen 6a bzw. 6b bzw. 6c. Dies ermöglicht eine mehrstufige Behandlung der zu reinigenden Rüben. In der letzten Stufe 6c können die vorher mit Wasserstrahlen behandelten Rüben getrocknet werden. Diese Stufe soll mittels der bei 42 angedeuteten Druckleitung an eine nicht näher dargestellte Druckluftquelle angeschlossen sein. Die beiden vorgeordneten Stufen 6a bzw. 6b können beide an die Hochdruckpumpe 14 angeschlossen sein. Es wäre aber auch denkbar, in der Eingangsstufe 6a zunächst mit direkt aus dem Becken 23 entnommenem Wasser vorzureinigen und anschließend in der nachgeordneten Stufe 6b mit sauberem, aus dem Wassertank 17 entnommenem Wasser nachzureinigen.

Bei dem in Figur 4 dargestellten Ausführungsbeispiel liegt ebenfalls ein geschlossener Wasserkreislauf vor. Der grundsätzliche Aufbau entspricht daher der Ausführungsform gemäß Figur 3, so daß auf die Erläuterung gleichbleibender Teile verzichtet werden kann. Bei diesem Ausführungsbeispiel dient das das Becken 23 durchsetzende Transportband 5 gleichzeitig zum Abräumen des Beckenbodens. Hierzu ist das Transportband 5 etwa bodenparallel geführt und bodenseitig mit etwa durch quer angeordnete Leisten oder dergleichen gebildeten Abstreiforganen 43 versehen. Diese Abstreiforgane 43 überfahren einen am oberen Beckenrand angeordneten, quer zur Bandlaufrichtung verlaufenden Schacht 44, in den die vom Beckenboden abgestreiften Feststoffe abgeworfen werden. Der Boden des Schachts 44 wird durch eine offene Rinne gebildet, in welcher eine Schnecke 45 angeordnet ist, mittels der die eingeworfenen Feststoffe ausgepreßt und seitwärts abtransportiert sowie auf den Ackerboden abgeworfen werden können. Die an das Schneckengehäuse angesetzte Rücklaufleitung 46 kann direkt in das Becken 23 eingeführt oder, wie im dargestellten Ausführungsbeispiel, als Zweigleitung einer an einen Beckenauslaßstutzen 47 angesetzten Saugleitung ausgebildet sein. Der Schacht 44 ist zwischen Becken 23 und Reinigungsstation 6 angeordnet. Hieraus abfließendes Schmutzwasser gelangt daher über das Leitblech 22 ebenfalls in den Schacht 44. Um dennoch eine ausreichende Versorgung des Beckens 23 mit Wasser sicherzustellen, können zumindest die hinteren Stufen der Reinigungsstation 6 doppelwandig ausgebildet sein, wobei die innere Wandung durch ein mit Strahldüsen 10 besetztes Siebgehäuse 48 gebildet wird, um welches ein geschlossenes Mantelgehäuse 49 herumgelegt ist, das mittels einer den Schacht 44 überbrückenden Ablaufleitung 50 an das Becken 23 angeschlossen ist.

Die von der hier an den direkt am Becken 23 sitzenden Auslaßstutzen 47 angeschlossenen Niederdruckpumpe 35 beaufschlagte Filterstation 36 ist im vorliegenden Ausführungsbeispiel in einen Wassertank 17a integriert, aus welchem die Reinigungsstation 6 beaufschlagt wird. Der Wassertank 17a ist hier bezüglich der die Reinigungsstation 6 beaufschlagenden Hochdruckpumpe 14 parallel zu dem hier eine zum Ausgleich von Verlusten dienende Wasserfüllung aufnehmenden Wassertank 17 gelegt, wobei die Hochdruckpumpe 14 mittels eines Ventils 51 alternativ entweder mit dem Tank 17 oder dem Tank 17a verbunden sein soll. Das Ventil 51 wird zweckmäßig durch eine im Tank 17a vorgesehene Überwachungseinrichtung so gesteuert, daß beim Unterschreiten eines Mindestwasserstands eine Umschaltung auf den praktisch als Reservetank dienenden Wassertank 17 erfolgt. Bei dem in Figur 4 dargestellten Ausführungsbeispiel besteht die Reinigungsstation 6 aus zwei hintereinander angeordneten Stufen 6a bzw. 6b. Die zweite Stufe 6b wird durch die Hochdruckpumpe 14 beaufschlagt. Die zur Vorreinigung dienende erste Stufe 6a wird im dargestellten Ausführungsbeispiel durch eine Mitteldruckpumpe 152 beaufschlagt, welche saugseitig ebenfalls am Wassertank 17a liegt.

## Patentansprüche

1. Verfahren zur Feldreinigung von Rodungsfrüchten, insbesondere Zuckerrüben, die nach der Rodung durch Strahlen eines Reinigungsmittels allseitig beaufschlagt werden, dadurch gekennzeichnet, daß das Reinigungsmittel zumindest zum überwiegenden Teil eine Flüssigkeit, vorzugsweise Wasser, ist, die bei der Feldreinigung mitgeführt und nach Beaufschlagung der Rodungsfrüchte einer zweistufigen Wiederaufbereitung unterzogen wird, indem die Reinigungsrückstände in Form von mit Schmutz beladener Flüssigkeit aufgefangen, die Schmutzrückstände hier- aus abgezogen und ausgepreßt und die Flüssigkeitsrückstände einer Feinreinigung unterzogen werden.

2. Verfahren nach Anspruch 1, dadurch gekennzeichnet, daß die zu reinigenden Rodungsfrüchte zunächst eingeweicht, dann abgestrahlt und vorzugsweise anschließend mit Luft abgetrocknet werden.

3. Vorrichtung zur Durchführung des Verfahrens nach Anspruch 1 mit mindestens einer, vorzugsweise auf einem mit einer Rodeeinrichtung versehenen Erntegerät angeordneten, mit Rodungsfrüchten in Durchlaufbetrieb beschickbaren Reinigungsstation (6), die mit peripher angeordneten, nach innen gerichteten Strahldüsen (10) versehen ist, dadurch gekennzeichnet, daß die Reinigungsstation (6) oberhalb einer Auffangeinrichtung (11 bzw. 23) für die Reinigungsrückstände angeordnet ist, der mindestens ein die Schmutzrückstände erfassendes Räumorgan (27 bzw. 43) zugeordnet ist, mittels dessen eine Preßeinrichtung (27, 28 bzw. 45) zum Auspressen und Ausbringen der Schmutzrückstände beaufschlagbar ist, und daß die Flüssigkeitsrückstände einer Nachreinigungseinrichtung (36) zuführbar sind, die mit einem Flüssigkeitstank (17) versehen ist, an den eine die Strahldüsen (10) der Reinigungsstation (6) beaufschlagende Flüssigkeitspumpe (14) freisaugend angeschlossen ist.

4. Vorrichtung nach Anspruch 3, dadurch gekennzeichnet, daß die Auffangeinrichtung als mit einer Einwurföffnung für die Rodungsfrüchte versehenes Auffangbecken (23) ausgebildet ist, in das ein mit Mitnehmern (25) für die Rodungsfrüchte versehenes, die Reinigungsstation (6) durchsetzendes Förderorgan (5) eintaucht.

5. Vorrichtung nach Anspruch 4, dadurch gekennzeichnet, daß das in das Auffangbecken (23) eintauchende Förderorgan (5) zur Bildung eines die Schmutzrückstände erfassenden Räumorgans beckenbodenparallel geführt und bodenseitig mit Abstreifeinrichtungen (43) versehen ist, welche einen am oberen Beckenrand angeordneten, zur Bildung der Preßeinrichtung mit einer etwa quer zur Laufrichtung des Transportorgans (5) angeordneten Schnecke (45) versehenen Schacht (44) überfahren.

6. Vorrichtung nach Anspruch 3 oder 4, dadurch gekennzeichnet, daß das Räumorgan als steigend angeordnete, zur Bildung einer Preßeinrichtung in Förderrichtung sich verjüngende, vorzugsweise mit einer Vibrationseinrichtung (32) versehene Schnecke (27) ausgebildet ist, die eingangsseitig in eine beckenbodenseitig vorgesehene Rinne hineinragt und die in einem den Flüssigkeitsspiegel (24) überragenden Siebgehäuse (28) gelagert ist, das von einem nach außen geschlossenen Mantelgehäuse (30) umgeben ist, welches mit einem Flüssigkeitsausgang (31) versehen ist.

7. Vorrichtung nach einem der vorhergehenden Ansprüche 3 bis 6, dadurch gekennzeichnet, daß ein etwa im Austauchbereich des Förderorgans (5) angeordnetes Zinkenband bzw. -rad (26) mit quer zur Laufrichtung des Förderorgans (5) bewegbaren, in die Flüssigkeit eintauchenden Zinkens vorgesehen ist.

8. Vorrichtung nach einem der vorhergehenden Ansprüche 3 bis 7, dadurch gekennzeichnet daß die vorzugsweise als Filtereinrichtung ausgebildete Nachreinigungseinrichtung (36) ein vorzugsweise mittels einer Niederdruckpumpe (35) mit den Flüssigkeitsrückständen beaufschlagbares Trommelgehäuse (37) aufweist, in welchem mindestens ein Filterboden (38) angeordnet ist, dem ein Abräumorgan (40) zugeordnet ist.

9. Vorrichtung nach einem der vorhergehenden Ansprüche 3 bis 8, dadurch gekennzeichnet, daß die Reinigungsstation (6) ein mit Flüssigkeitsdüsen (10) besetztes Siebgehäuse (48) aufweist, das von einem nach außen geschlossenen Mantelgehäuse (49) umgeben ist, an welches eine in die Auffangeinrichtung (11 bzw. 23) mündende Abflußleitung (50) angeschlossen ist.

10. Vorrichtung nach einem der vorhergehenden Ansprüche 3 bis 9, dadurch gekennzeichnet, daß die Reinigungsstation (6) mehrere hintereinander angeordnete Stufen (6a, 6b, 6c) aufweist, von denen die in Transportrichtung des Förderorgans (5) letzte Stufe (6c) an eine Druckluftleitung angeschlossen ist.

**Claims**

1. In a method for cleaning root crops in the field, in particular sugar beets, which after having been lifted off the ground are hit on all sides by jets of a cleaning agent, characterized in that the cleaning agent is at least for the main part a liquid, preferably water, which is carried along during the cleaning in the field and which after hitting the root crops undergoes recycling in two steps, whereby the remainder of the cleaning process in the form of a liquid laden with dirt is captured, the remaining dirt is removed from it and is squeezed out, and the remaining liquid undergoes fine cleaning.

2. A method as claimed in claim 1 characterized in that the root crops to be cleaned are first soaked, then hit by jets of the cleaning agent, and afterwards preferably dried by means of air.

3. A system for practising the method as claimed in claim 1 with at least one cleaning station (6) preferably mounted on a harvesting machine provided with a lifting mechanism, and being fed with root crops passing through it, which has nozzles (10) being arranged peripherally and directed inwardly, characterized in that the cleaning station (6) is mounted above a capturing mechanism (11 or 23 respectively) for the remainder of the cleaning process, which has at least one sweeping device (27 or 43 respectively) capturing the remaining dirt, by means of which a squeezing mechanism (27, 28 or 45 respectively) for squeezing out and taking away the remaining dirt can be fed, and that the remaining liquid can be conveyed to a filtering unit (36) which has a tank (17) to which a pump (14) supplying the nozzles (10) of the cleaning station (6) with liquid is directly connected by its intake line.

4. A system as claimed in claim 3 characterized in that the capturing mechanism is in the form of a reservoir (23) having a charging opening for the root crops, into which dips a conveyor belt (5) which has carriers (25) for the root crops and which passes through the cleaning station (6).

5. A system as claimed in claim 4 characterized in that the conveyor belt (5) dipping into the reservoir (23), for forming a sweeping device capturing the remaining dirt, runs parallel to the bottom of the reservoir and, on the side of the bottom, has sweeping components (43) which pass over a well (44) located at the upper edge of the reservoir which, for forming the squeezing mechanism, has a screw (45) arranged approximately transversally to the motion of the conveyor belt (5).

6. A system as claimed in claim 3 or 5 characterized in that the sweeping device is in the form a screw (27) which is arranged ascendingly, is conical in the direction of the motion for forming a squeezing mechanism, and preferably has a vibrator (32), said screw, on the side of the drawing-in area, projecting into a groove provided on the side of the bottom of the reservoir, and being located in a strainer housing (28) which is above the reference mark (14) of the water level and is enveloped by an outwardly closed jacket (30) with an outlet socket (31) for the liquid.

7. A system as claimed in anyone of the preceding claims 3 to 6 characterized in that there is a spiked belt or wheel (26) respectively arranged approximately in the zone of emersion of the conveyor belt (5), which has spikes movable transversally to the motion of the conveyor belt (5) and dipping into the liquid.

8. A system as claimed in anyone of the preceding claims 3 to 7 characterized in that the filtering unit (36), which is preferably in the form of a filtering device, has a drum (37) into which the remaining water can enter preferably by means of a low pressure pump (35), and in which there is arranged at least one filter plate (38) with a blade (40) assigned to it.

9. A system as claimed in anyone of the preceding claims 3 to 8 characterized in that the cleaning station (6) has a strainer (48) bearing nozzles (10), which is surrounded by an outwardly closed jacket (49) to which there is connected a pipe (50) emptying into the capturing mechanism (11 or 23 respectively).

10. A system as claimed in anyone of the preceding claims 3 to 9 characterized in that the cleaning station (6) has several subsequent stages (6a, 6b, 6c) of which the, in the direction of the motion of the conveyor belt, last stage (6c) is connected to a line of compressed air.

## Revendications

1. Procédé destiné au nettoyage en champ de plantes-racines, en particulier des betteraves sucrières, qui, après l'arrachage, sont aspergées de tous côtés par la projection d'un fluide de nettoyage, caractérisé en ce que le fluide de nettoyage est, du moins essentiellement, constitué par un liquide, de préférence de l'eau, qui est amené sur le champ en vue du nettoyage et, après avoir aspergé les plantes-racines, subit un retraitement en deux phases dans lequel les résidus du nettoyage sont collectés sous forme de liquide chargé d'impuretés, les impuretés résiduelles en sont extraites et exprimées et le liquide résiduel est soumis à une épuration fine.

2. Procédé selon la revendication 1, caractérisé en ce que les plantes-racines à nettoyer sont tout d'abord ramollies, puis aspergées et sont ensuite séchées de préférence à l'air.

3. Dispositif destiné à la mise en œuvre du procédé décrit à la revendication 1 équipé d'au moins un poste de nettoyage (6), monté de préférence sur une récolteuse équipée d'un dispositif d'arrachage et pouvant être alimenté en continu de plantes-racines, dont la circonférence est munie de buses (10) orientées vers l'intérieur, caractérisé en ce que le poste de nettoyage (6) est placé au-dessus d'un dispositif récepteur (11 ou 23) des résidus du nettoyage pourvu d'au moins un élément d'évacuation (27 ou 43) des impuretés résiduelles, qui permet d'alimenter un dispositif de pressage (27, 28 ou 45) destiné à exprimer et à évacuer les impuretés résiduelles et en ce que le liquide résiduel peut être amené à un dispositif d'épuration fine (36) équipé d'un réservoir à liquide (17) auquel est raccordée, à aspiration libre, une pompe à liquide (14) alimentant les buses (10) du poste de nettoyage (6).

4. Dispositif selon la revendication 4 caractérisé en ce que le dispositif récepteur se présente sous la forme d'une cuve réceptrice (23) pourvue d'un orifice d'alimentation des plantes-racines dans laquelle plonge un élément de transport (5) équipé d'entraîneurs (25) destinés aux plantes-racines qui traversent le poste de nettoyage (6).

5. Dispositif selon la revendication 4 caractérisé en ce que l'élément de transport (5) qui plonge dans la cuve réceptrice (23) est construit parallèlement au fond de la cuve en vue de former un élément d'évacuation des impuretés résiduelles et qui est, côté fond, pourvu de dispositifs racleurs (43) qui passent au-dessus d'un puits (44) disposé au droit de l'arête supérieure de la cuve et équipé d'une hélice (45) placée transversalement au sens de la marche de l'élément de transport (5) de manière à constituer le dispositif de pressage.

6. Dispositif selon la revendication 3 ou 4 caractérisé en ce que l'élément d'évacuation se présente sous la forme d'une hélice (27) qui monte vers l'arête supérieure de la cuve et se rétrécit de manière à former un dispositif de pressage dans le sens du transport et qui est de préférence équipée d'un dispositif vibrateur (32), hélice qui pénètre côté entrée dans une goulotte prévue du côté du fond de la cuve et qui est logée dans une enveloppe à tamis (28) débordant du niveau de l'eau (24) qui est elle-même entourée par une enveloppe fermée vers l'extérieur (30) et équipée d'une sortie pour le liquide (31).

7. Dispositif selon l'une des revendications précédentes 3 à 6 caractérisé en ce qu'une bande ou une roue à dents (26) disposée approximativement dans la zone d'échange de l'élément de transport (5) est équipée de dents qui se meuvent transversalement par rapport au sens de la marche de l'élément de transport (5) et plongent dans le liquide.

8. Dispositif selon l'une des revendications précédentes 3 à 7 caractérisé en ce que le dispositif d'épuration fine (36) qui se présente de préférence sous la forme d'un dispositif de filtrage présente une enveloppe de tambour (37) pouvant être alimentée en liquide résiduel de préférence au moyen d'une pompe basse pression (35), enveloppe comportant au moins un filtre plat (38) raclé par un élément d'évacuation (40).

9. Dispositif selon l'une des revendications 3 à 8 caractérisé en ce que le poste de nettoyage (6) présente une enveloppe à tamis (48) équipée de buses à liquide (10) qui est entourée par une enveloppe (49) fermée vers l'extérieur à laquelle est raccordée une canalisation d'écoulement (50) débouchant dans le dispositif récepteur (11 ou 23).

10. Dispositif selon l'une des revendications précédentes 3 à 9 caractérisé en ce que le poste de nettoyage (6) présente plusieurs étages (6a, 6b, 6c) disposés les uns derrière les autres dans lequel le dernier étage (6c) vu dans le sens du transport de l'élément de transport (5) est raccordé à une canalisation d'air comprimé.

Fig.2

Fig.1

Fig.3

Fig.4

0 084 618